# EUROPEAN PATENT SPECIFICATION

(11) **EP 4 439 483 B1**
(45) Date of publication and mention of the grant of the patent: **17.09.2025**
(21) Application number: 23165965.7
(22) Date of filing: 31.03.2023
(51) Int. Cl.: G06V 10/80, G06V 10/82, G06V 10/98, G06V 20/13

(54) **ANOMALY DETECTION SYSTEMS AND METHODS FOR IMAGES**
SYSTEME UND VERFAHREN ZUR ERKENNUNG VON ANOMALIEN IN BILDERN
SYSTÈMES ET PROCÉDÉS DE DÉTECTION D'ANOMALIES DANS IMAGES

(43) Date of publication of application: 02.10.2024
(73) Proprietor: Iceye Oy, 02150 Espoo (FI)
(72) Inventor: Vinholi, João, 02150 Espoo (FI); Arbenina, Mariia, 02150 Espoo (FI); Almaksour, Abdullah, 02150 Espoo (FI)
(74) Representative: Crowell & Moring U.K. LLP

(56) References cited:
- WO-A1-2022/144340
- US-A1- 2021 124 981
- US-A1- 2021 303 867
- LEROUX SAM ET AL: "Multi-branch Neural Networks for Video Anomaly Detection in Adverse Lighting and Weather Conditions", 2022 IEEE/CVF WINTER CONFERENCE ON APPLICATIONS OF COMPUTER VISION (WACV), IEEE, 3 January 2022 (2022-01-03), pages 3027 - 3035, XP034086558, DOI: 10.1109/WACV51458.2022.00308

## Description

### TECHNICAL FIELD

The present disclosure is directed to anomaly detection in images.

### BACKGROUND

Inspecting images for anomalies (e.g. ambiguities, artifacts, etc.) that should not be there is important in various fields. For example, anomaly detection in earth observation images such as synthetic aperture radar (SAR) images is an important task that can help to identify issues with images being used in numerous applications, including damage assessment, oil spill detection, and land use classification. Anomaly detection is useful for making sure that SAR images used in the detection and forecast of natural catastrophes are high quality, as faulty data can lead to inaccurate predictions and potentially dangerous situations. Traditional methods for anomaly detection in images often rely on manual inspection of each image before being used, which can be time-consuming and subjective.

US 2021/124981 A1 discloses a method for determining an optimal anomaly detection model for processing input data. US 2021/303867 A1 describes systems, methods, and computer program products for controlling an object. An example method can comprise (a) obtaining video data of the object and (b) performing motion analysis on the video data to generate modified video data. The method can further comprise (c) using artificial intelligence (AI) to identify a set of features in the modified video data. WO 2022/144340 A1 describes a method of anomaly detection using a trained artificial neural network (502) configured to implement at least an auto-associative function for replicating an input data sample at one or more outputs (A), the method comprising: a) injecting an input data sample into the trained artificial neural network (502) in order to generate a first replicated sample at the one or more outputs (A); b) performing at least one reinjection operation; c) computing a first parameter based on a distance between a value of an nth replicated sample present at the one or more outputs and a value of one of the previously injected or reinjected values; and d) comparing the first parameter with a first threshold (δ), and processing the input data sample as an anomalous data sample if the first threshold is exceeded.

### SUMMARY

The invention is set out in the independent claims.

The present invention provides a computer-implemented anomaly detection method as claimed in claim 1.

In some aspects, the image comprises a plurality of image frames, and outputting the frame output vector for each of the at least one image frame comprises combining the frame output vectors for each of the plurality of image frames to generate an overall output vector for the image, and outputting the overall output vector for the image.

In some aspects, generating the overall output vector for the image comprises selecting a highest probability of respective anomalies from the frame output vectors for each of the plurality of image frames.

In some aspects, at least two of the plurality of neural networks are trained to identify in the respective image frame the presence of a same anomaly of the plurality of anomalies, and generating the frame output vector comprises statistically aggregating the probability of the same anomaly determined by the at least two of the plurality of neural networks.

In some aspects, the method further comprises, for each respective image frame of the at least one image frame in the image: classifying, using a neural network, a probability of the respective image frame being nominal, the neural network being trained to identify the respective image frame as being nominal, and to generate an output vector indicative of a probability of the respective image frame being nominal; wherein generating the frame output vector for the respective image frame further comprises combining the output vector indicative of the probability of the respective image frame being nominal.

In some aspects, the at least one image frame is a reduced resolution image frame.

In some aspects, the plurality of neural networks are convolutional neural networks.

In some aspects, the method further comprises, for each respective image frame in the at least one image frame in the image: downsampling the respective image frame using each of the plurality of neural networks, wherein the plurality of neural networks are further trained to downsample the respective image frame while preserving image features in the respective image frame used for determining the probabilities of each of the plurality of anomalies being present in the image frame.

In some aspects, a frame output vector for an image frame indicates that a probability of an anomaly being present in the image frame of the image exceeds a predetermined threshold, and the method further comprises flagging the image for review.

In some aspects, none of the probabilities of each of the plurality of anomalies in the frame output vector for each of the at least one image frame exceeds a predetermined threshold, and the method further comprises classifying the image as nominal.

In some aspects, the image is an earth observation image.

The image is a synthetic aperture radar (SAR) image.

The plurality of anomalies comprise two or more of: blurry, partially blurry, unfocused or smeared, range or nadir return ambiguities, azimuth ambiguities, radio frequency interference, missing data, thunderclouds, amplitude gradients, beam tiling issues, and low contrast/high noise.

According to another aspect of the present disclosure, there is provided an anomaly detection system, comprising: an image database storing a plurality of image frames; a processor; and a non-transitory computer readable medium having stored thereon computer program code that is executable by the processor and that, when executed by the processor, configures the system to retrieve image frames from the image database and perform the anomaly detection method of any one of the above aspects.

According to another aspect of the present disclosure there is provided a non-transitory computer readable medium having stored thereon computer program code that is executable by a processor and that, when executed by the processor, causes the processor to perform the anomaly detection method of any one of the above aspects.

According to another aspect of the present disclosure there is provided a method for training a neural network to detect anomalies in images, the method comprising: obtaining a training image frame, wherein the training image frame has a known anomaly; and training the neural network to classify a probability of the anomaly being present in the training image frame, and to generate an output vector indicative of the probability that the anomaly is present in the image frame.

The plurality of anomalies comprise two or more of: blurry, partially blurry, unfocused or smeared, range and nadir return ambiguities, azimuth ambiguities, radio frequency interference, missing data, thunderclouds, amplitude gradients, beam tiling issues, and low contrast/high noise.

In some aspects, the neural network is further trained to classify a probability of the training image frame being nominal.

In some aspects, the neural network is further trained to downsample the training image frame while preserving image features in the training image frame used for classifying the probability of the anomaly being present in the training image frame.

In some aspects, the neural network is a convolutional neural network.

According to another aspect of the present disclosure, there is provided a system for training a neural network, comprising: a training image database storing a plurality of training image frames; a processor; and a non-transitory computer readable medium having stored thereon computer program code that is executable by the processor and that, when executed by the processor, configures the system to retrieve a training image frames from the training image database and perform the method for training the neural network.

According to another aspect of the present disclosure, there is provided a non-transitory computer readable medium having stored thereon computer program code that is executable by a processor and that, when executed by the processor, causes the processor to perform the method for training the neural network.

According to another aspect of the present disclosure, there is provided a neural network trained in accordance with any one of the above aspects of the method for training a neural network.

This summary does not necessarily describe the entire scope of all aspects. Other aspects, features and advantages will be apparent to those of ordinary skill in the art upon review of the following description of specific embodiments.

### BRIEF DESCRIPTION OF THE DRAWINGS

In the accompanying drawings, which illustrate one or more example embodiments:
FIG. 1 depicts an example of a system for capturing synthetic aperture radar images;
FIG. 2 depicts an anomaly detection system for detecting anomalies in images;
FIGs. 3A to 3D provide flow diagrams of a process for detecting an anomaly in an image, which may be implemented using the anomaly detection system of FIG. 2;
FIGs. 4A to 4T depict examples of synthetic aperture radar (SAR) images with anomalies used as training images;
FIG. 5 depicts an anomaly detection method for detecting anomalies in images; and
FIG. 6 depicts an example flow diagram of a deployment scheme of the anomaly detection method for quality control.

### DETAILED DESCRIPTION

In accordance with the present disclosure, systems and methods for detecting anomalies in images are disclosed. The systems and methods are used to detect anomalies in synthetic aperture radar (SAR) images. SAR images are a type of image captured by transmitting and measuring reflections of radar signals. More particularly, SAR images are typically acquired from an aerial or astronautical transmitter and receiver, such as a transmitter that comprises part of an airplane or a satellite. SAR images are captured using a "synthetic aperture". A shorter and consequently more practical antenna is used to make a series of measurements of reflected radar signals, and those measurements are combined with the movement of an aircraft or a satellite to simulate a much larger antenna. Consequently, the resolution of a SAR image can be as high or higher than the resolution of a radar image captured using a conventional static antenna much larger than the one used to capture the SAR image.

Anomalies may be introduced in the SAR images based on process of capturing the image itself, or by subsequent processing of raw image data to generate an image for output. Analyzing a SAR image for anomalies is a challenging task given the number of different types of anomalies that may be present in the image, as well as the size of the image. For example, a full-resolution SAR image could be on the order of 2 GB. In accordance with the present disclosure, anomaly detection systems and methods are disclosed for detecting anomalies in a SAR image, and can be used for classifying an image as anomalous or nominal. The anomaly detection systems and methods thus provide an automated quality assurance of images, and can help to avoid time-consuming manual inspection of the images. Instead, only those images which the anomaly detection systems and methods identify as having a high probability of an anomaly being present may optionally be flagged for manual review/confirmation.

In accordance with the present disclosure, an image is received comprising at least one image frame. For each respective image frame of the at least one image frame in the image, a plurality of neural networks are used to classify probabilities of each of a plurality of anomalies being present in the respective image frame. The plurality of neural networks are each respectively trained to identify in the respective image frame a presence of at least one anomaly of the plurality of anomalies, and to generate an output vector indicative of probabilities of the at least one anomaly being present in the respective image frame. A frame output vector is generated for the respective image frame by combining the output vector generated from each of the plurality of neural networks for the respective image frame. The frame output vector for each of the at least one image frame is output, which may comprise combining the frame output vectors for each of the image frames to generate an overall output vector for the image.

A plurality of neural networks are used to detect anomalies in a respective image frame instead of a single neural network being used to detect all possible anomalies. Using the plurality of neural networks in this manner realizes significant time and cost savings, and also allows the classification by the plurality of neural networks to be executed in parallel.

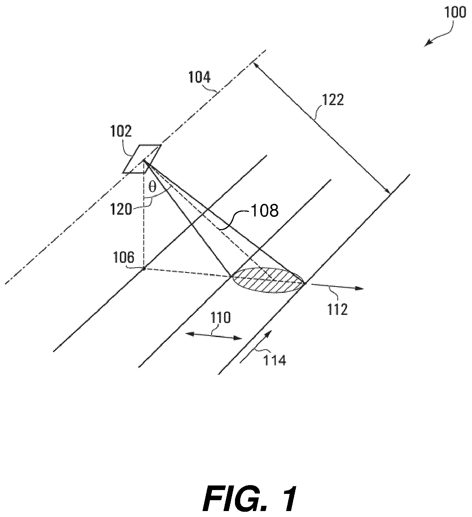

Embodiments are described below, by way of example only, with reference to Figures 1 to 6.

FIG. 1 depicts an example of a system for capturing synthetic aperture radar (SAR) images. More particularly, FIG. 1 shows schematically how an aerial or space-based antenna 102 is used to capture SAR images. The antenna 102 may be satellite or airplane mounted, for example. The antenna 102 travels along a flight path 104, and directly below the antenna 102 is the nadir 106. The antenna 102 emits a radar signal 108 at a look angle 120 that illuminates a swath 110 on the ground, which is offset from the nadir 106. The antenna 102 measures the radial line of sight distance between the antenna 102 and a point on the surface along a slant range 122. FIG. 1 also shows a range direction 112 and an azimuth direction 114, with the range direction 112 extending perpendicularly away from the flight path 104, and the azimuth direction 114 extending parallel to the flight path 104. In respect of the range direction 112, the swath 110 is between points along the range direction 112 referred to as the near range and the far range.

Typically, a SAR system transmits radio-frequency radiation in pulses and records the returning echoes. Data derived from the returning echoes is sampled and stored for processing in order to form an image. Anomalies in the SAR images may be associated with the image capture or in subsequent processing of the SAR image. For example, anomalies or ambiguities can arise in the data and the images from radar echoes backscattered from points not in the main target imaging area. These ambiguities can arise because it is difficult to perfectly direct a radar beam only to the target image area. In reality, the radar beam has sidelobes that also illuminate areas outside of the desired imaging area, and result in radar echoes from these "ambiguous" areas that are then mixed in with the returns from the "unambiguous" areas. These echoes from undesired regions, which may be from previous and later transmitted pulses, can include ambiguities in both the azimuth and range directions. Ambiguities can cause an object or feature on the ground to appear in multiple positions in the image, only one of which is the true location. Even though the amplitude of some of these ambiguous signals may be smaller than the non-ambiguous signals, they can cause confusion in the image and degrade the quality of the image. Other examples of anomalies that can be found in SAR images include blurriness, SAR data that has not been focused properly, strong reflections from the range nadir causing an ambiguity that appears as a line in the image, radio frequency interference, corrupted or missing areas of an image, interference from intense atmospheric conditions such as thunderclouds, gradients in amplitude in the image, beam tiling issues arising from how SAR data and images are put together, low contrast, and others. In accordance with the present disclosure, a plurality of neural networks are trained and used to identify anomalies in the SAR images, as described below.

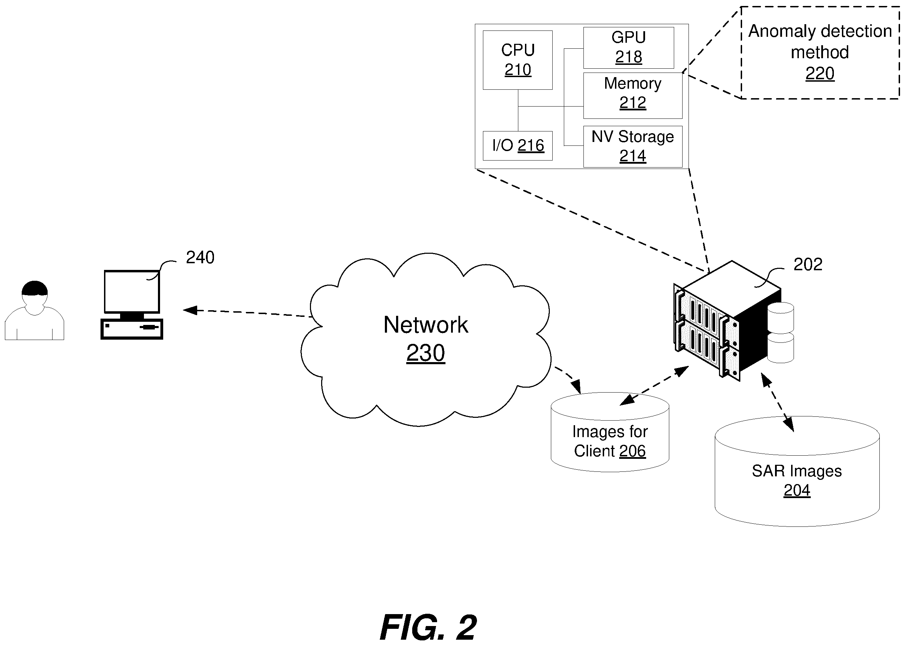

FIG. 2 depicts an anomaly detection system for detecting anomalies in images. The system comprises one or more servers 202 configured to detect anomalies in SAR images 204 stored in a database. The server(s) 202 each comprise a CPU 210, a non-transitory computer-readable memory 212, a non-volatile storage 214, an input/output interface 216, and graphical processing units ("GPU") 218. The non-transitory computer-readable memory 212 comprises computer-executable instructions stored thereon at runtime which, when executed by the CPU 210, configure the server to perform an anomaly detection method 220 as described in more detail herein. The non-volatile storage 214 has stored on it computer-executable instructions that are loaded into the non-transitory computer-readable memory at runtime. The input/output interface 216 allows the server to communicate with one or more external devices (e.g. via network 230). The non-transitory computer-readable memory also comprises a plurality of neural networks each being trained to identify a presence of at least one anomaly of the plurality of anomalies, and to generate an output vector indicative of probabilities of the at least one anomaly being present in respective image frames. The GPU 218 controls a display and may be used to run one or more of the neural networks, which may be executed in parallel as described in more detail herein. It will be appreciated that there may be multiple servers 202 implemented to detect anomalies in SAR images 204, and that different neural networks could be executed at different servers, including different servers in parallel. Multiple servers 202 may be networked together and collectively perform the anomaly detection method 220 using distributed computing.

The server(s) 202 implement the anomaly detection method 220 on SAR images 204 before outputting the images to a client, for example. Images that are detected as having a high probability of an anomaly being present may not be sent to the client, and may require further manual review or attempt to correct any anomalies present in the images. Images that are classified as nominal may be stored and made available to the client as images for the client 206, which are accessible by client device 240 via network 230.

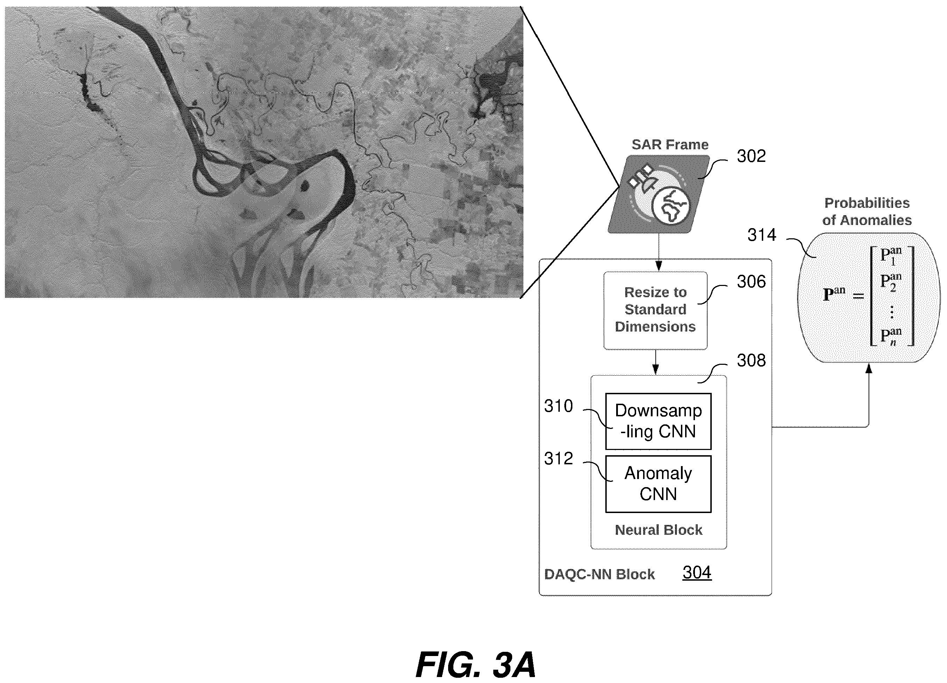

FIGs. 3A to 3D provide flow diagrams of a process for detecting an anomaly in an image, which may be implemented using the anomaly detection system of FIG. 2.

Referring to FIG. 3A, a synthetic aperture radar (SAR) image frame 302, which was acquired using a synthetic aperture radar system, is input into a deep automated quality control neural network (DAQC-NN Block) 304. The image frame 302 may have been reduced in resolution prior to being input into DAQC-NN block 304. For example, a SAR image frame as described above may be 2 GB, which would be too large to process efficiently using a machine learning model. Accordingly, the SAR image frame 302 may be a reduced resolution image frame that has already been compressed. As one example, the SAR image frame may be compressed to 14 MB. The compression from 2GB to 14MB involves reduction of pixel complexity (i.e. the number of values that each pixel can represent) as well as the size of the overall image frame. For example, a 16 bit full resolution SAR image can have 65536 different values per pixel, while a lower resolution 8 bit image can have only 255 different values per pixel. Another aspect is that the number of square meters per pixels in a compressed SAR image is much higher than in a regular unprocessed image. Importantly, phase information (for SAR data, each pixel in a SAR image can be represented by both an amplitude and a phase) can be removed and does not need to be used for processing by the DAQC-NN block 304. Further, compression can be done with some filtering to remove noise, for example. However, the exact manner in which compression is done to provide the SAR image frame 302 is not limited to the above examples. In a further example, compressing the full-resolution SAR image frame may also involve converting the file type, e.g. from a .tif format to a .png format, however the format does not necessarily make a difference, as both formats can have any number of pixels, and the SAR image could also start in and be compressed into alternate formats other than .tif and .png, respectively.

It will be appreciated that compression of a full-resolution SAR image to produce the reduced resolution SAR image 302 still entails a significant loss of information (e.g. of the amplitude information) and detail from the original SAR image. However, it has been found that a compression on the order of approximately between 250x to 500x reduction of pixels still retains enough information and detail for the DAQC-NN block 304 to process the image frame 302 and identify anomalies. For example, a 20000x10000 pixels SAR image frame can be resized to 1024x512 pixels, and it retains practically all the anomalies visible. Accordingly, a reduced resolution image can be input to the DAQC-NN block 304 that is small enough to be processed quickly and efficiently, while still retaining sufficient information for anomaly detection. The anomaly detection systems and methods in accordance with the present disclosure thus provide a practical quality assurance tool.

Within the DAQC-NN block 304, the image frame 302 may be resized to standard dimensions at block 306. Here, the image frame 302 is resized to a given dimension so that every image frame input to the neural network has the same dimensions, which was required for training the neural network. Resizing the image frame 302 at block 306 keeps the original aspect ratio. Zeros may be added to make the frames square, i.e. so the image frame has the same number of pixels in height and width. For example, the SAR image frame 302 may have been previously compressed to a size of 3000x2000 pixels. It may then be resized at block 306 to a size of 1024x1024 pixels, by first reducing the number of pixels to 1024x682, keeping the proportions of 3/2, and then to 1024x1024 pixels by adding zeros in the second dimension. Alternatively, the SAR image frame 302 may have been previously compressed to 1024x512 pixels, and is resized at block 306 to a size of 1024x1024 pixels by adding zeros in the second dimension. The resized image frame is passed to neural block 308.

The neural block 308 is shown as comprising two blocks forming a convolutional neural network (CNN) architecture. While the neural block 308 is shown and described below as being a convolutional neural network, it will be appreciated that transformer-based models could be used as well, or a combination of these. Referring to the neural block 308, a downsampling convolutional neural network block 310 downsamples image frame 302 such that it can be input into the anomaly convolutional neural network block 312 and processed by the CNN. The anomaly CNN block 312 comprises an anomaly convolutional neural network that is trained to identify in the respective image frame a presence of at least one anomaly of a plurality of anomalies. The anomaly CNN 312 may have requirements on input image size. For example, the neural block 308 may leverage an existing type of CNN, such as EfficientNet V2, which is pre-trained to detect various objects using publicly available data sets of optical images, e.g. ImageNet, which are regular low-resolution optical images that usually have a relative low input size, e.g. 224x224 pixels. SAR images, even once compressed, are much larger than what these existing types of CNNs are trained for and the anomaly CNN block 312 may therefore require images that are smaller than the image frame 302 even though it has already been compressed. Compressing the image frame 302 further before submitting to the DAQC-NN block 304 would cause too much information loss for anomaly detection. For example, if the image frame resolution was simply further reduced, for example from 2048x2048 pixels down to 224x224 pixels, the image quality would be bad leading to poor anomaly detection, and also the anomalous features may be obscured or removed (e.g., in cases of small anomalous artifacts) from the image frame due to the reduction in resolution. Accordingly, the neural block 308 comprises downsampling CNN block 310, which is a set of CNN layers that intelligently downsamples the input image to a size compatible with the anomaly CNN architecture being used. The anomaly CNN block 312, which is serially connected to the output of the downsampling CNN block 310, comprises a series of CNN layers, which may be extracted from a traditional CNN model. Thus, the downsampling CNN block 310 is trained to extract the useful features from the input image frame 302 while executing the downsampling operation. The training and inference processes take place in both blocks jointly, acting as blocks of the complete CNN within neural block 308. Accordingly, the downsampling CNN block 310 is trained to downsample the image while preserving image features that are used for determining the probabilities of anomalies being present in the frame by the anomaly CNN block 312. Through training, the downsampling CNN block 310 learns what features are important for preservation.

The anomaly convolution neural network in anomaly CNN block 312 is trained to detect one or more anomalies in images. Training image frames having a known anomaly are obtained and the anomaly convolutional neural network is trained to classify the probability the anomaly being present in the training image frame, and to generate an output vector indicative of a probability that the anomaly is present in the image frame. The plurality of anomalies comprise two or more of: blurry, partially blurry, unfocused or smeared, range and nadir return ambiguities, azimuth ambiguities, radio frequency interference, missing data, thunderclouds, amplitude gradient, beam tiling issues, and low contrast/high noise. Other image anomalies are possible and could be detected. Further, the anomaly convolutional neural network 312 may be trained to identify the respective image as being nominal, and to generate an output vector indicative of a probability of the respective image frame being nominal. The anomaly neural networks in accordance with the present disclosure were trained on 9200 manually-labelled image frames, of which 2795 were labelled as anomalous and the remainder were labelled as nominal. The anomalous image frames contained one or more of the above-noted types of anomalies. The trained anomaly convolutional neural network 312 is used to classify probabilities of one or more anomalies being present in the image frame (and optionally a probability of the image frame being nominal), and generate an output vector 314 of the one or more probabilities.

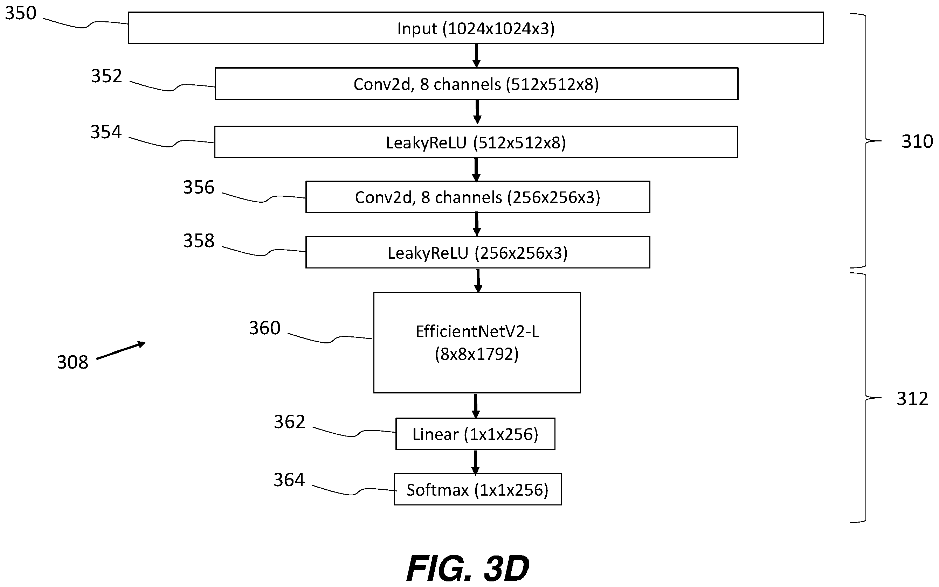

Figure 3D shows an example implementation of neural block 308 in Figure 3A. In this example, an EfficientNetV2-L convolutional neural network (CNN) 360 is used to identify anomalies in an input image 350. EfficientNetV2-L is an example of neural network that can be used for detecting objects in low-resolution images. However, it would not be obvious to apply it to high-resolution images such as SAR and other Earth Monitoring images because the resolution mismatch would lead to too much loss of information for it to be able to reliably detect objects in such high-resolution images. In this example, this problem is solved through the addition of a downsampling CNN 310 in front of the anomaly CNN 312, that comprises the EfficientNetV2-L CNN 360.

The downsampling CNN 310 takes in an input image at step 350. Note that at this step the input image has already been significantly resolution reduced compared to the original SAR image, and has been resized to standard dimensions, as described above. For example, the input at step 350 could be 1024x1024 pixels. Despite the large resolution reduction, sufficient information remains to detect anomalies. However, the images are still quite a bit too large to run with a CNN such as EfficientNetV2-L, and further resolution reduction would remove too much information and the anomalies would no longer be detectable.

In order to solve this problem, the downsampling CNN 310 intelligently downsizes the image in order to maintain the anomaly information that it has been trained on. It does this by first using a Conv2D layer 352 that works like a filter and extracts important features from the input 350. The CNN does this by sliding over the image and performing a mathematical operation known as a convolution, which involves multiplying the values in the filter with the corresponding pixel values in the image and summing them up. Imagine a grid of numbers that represent an image, and placing a smaller grid of numbers (the filter) on top of it. Each number in the filter is then multiplied with the corresponding number in the image and the results added up. This results in a single number, which represents a feature of the image. The filter then moves to the next position in the image, and the process is repeated, creating a new feature. This is done many times with different filters to extract different features from the image. In a Conv2D layer, multiple filters are used to extract multiple features from the image, creating a "feature map". The resulting feature map can be used as input to the next layer of the network, which can extract more complex features from the image. In an example, Conv2D is a single block of convolutions with stride equal to two. Stride is a parameter that indicates how many pixels the convolution jumps for every step in the convolution. In practice, stride set to two reduces the input dimensions by two, in this example from 1024 x 1024 to 512 x 512.

At the next layer of the downsampling CNN 308, an activation function 354 is applied to the output of each neuron in a neural network to introduce nonlinearity and allow the network to learn more complex functions. In an example, activation function LeakyReLU is used to apply a simple function to the input of a neuron. Leaky ReLU works by taking the input to a neuron and applying a simple function to it. If the input is positive, the output is just the input value. However, if the input is negative, the output is a small constant value (usually a fraction like 0.1) multiplied by the input. This "leaky" behavior is what distinguishes Leaky ReLU from the traditional ReLU function, which simply sets negative inputs to zero. The leaky behavior allows gradients to flow even when the input is negative, which can help prevent the "dying ReLU" problem, where neurons can get stuck with zero outputs and stop learning.

A second application of a Conv2d CNN at layer 356 and an activation function at layer 358 produces an image with significantly reduced size with features highlighted that can then serve as input into the anomaly detection CNN 312, starting with the EfficientNETV2-L block 360 and followed by a linear activation function 362 and a non-linear activation function 364. The whole neural network is then trained together to enable it to identify and retain anomaly information that can be detected by the anomaly CNN. The output is a probability of the input image frame containing a particular anomaly or set of anomalies. This is not the only example for how block 308 can be implemented, and other examples for implementing block 308 may also be evident to one skilled in the art.

In accordance with the present disclosure, multiple anomaly neural networks are trained to each detect one or a few types of anomalies. Training multiple anomaly neural networks to detect one or a few types of anomalies provides more accurate anomaly detection than training a single neural network to detect all possible anomalies. Moreover, training multiple anomaly neural networks allows the different anomaly neural networks to be executed in parallel, thus reducing processing time and costs.

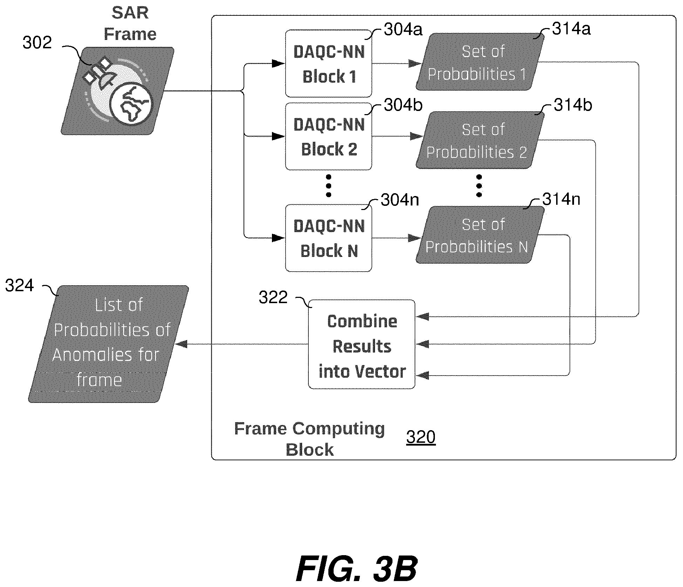

Using multiple anomaly neural networks to classify an image frame is shown in FIG. 3B, in which the SAR image frame 302 is input into multiple DAQC-NN blocks 304a, 304b, ..., 304n, of a frame computing block 320. Each of the DAQC-NN blocks 304a, 304b, ..., 304n, contain a neural block, as described above, with a neural network trained to identify in the image frame 302 one or more anomalies. While the anomaly neural networks in different DAQC-NN blocks are generally trained to identify different types of anomalies in the image frame, it will also be appreciated that some anomaly neural networks may be trained to detect a same type of anomaly. Moreover, one or more of the anomaly neural networks in different DAQC-NN blocks may be used to classify a probability of the image frame being nominal.

As described with reference to FIG. 3A, each of the DAQC-NN blocks 304a, 304b, ..., 304n, generate a respective output vector 314a, 314b, ..., 314n, indicative of probabilities of at least one anomaly being present in the respective image frame, and optionally the probability of the image frame being nominal. The output vectors 314a, 314b, ..., 314n, are combined to generate a frame output vector 322 for the image frame 302. Where there is more than one probability calculated for a given anomaly (i.e. two or more of the plurality of neural networks in different DAQC-NN blocks classify a probability of the presence of a same anomaly), generating the frame output vector 322 may comprise statistically aggregating the probabilities, for example taking the average, median, etc. A list of the probabilities (i.e. the frame output vector) for the image frame are output at 324.

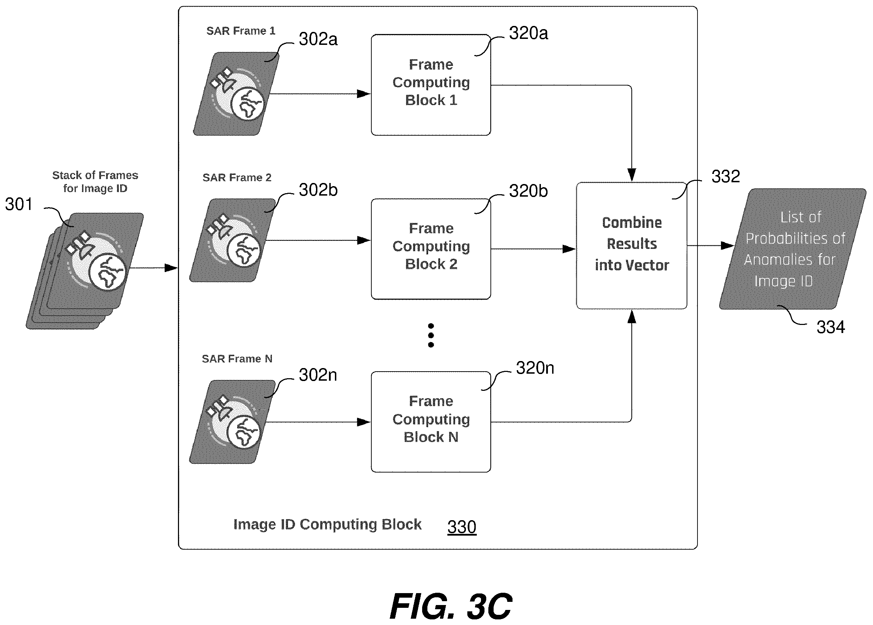

An image being processed may comprise more than one image frame (e.g. a set of image frames). For example, for SAR images, a client may wish to receive an image of an area larger than the standard coverage specified for the ordered acquisition mode. In that case, a longer acquisition will be processed and output as separate image frames that make up the image. Alternatively, a client may wish to receive an image of an area that has been captured between two or more image frames. Accordingly, an image may comprise one or more image frames, each showing a different area of the image. As seen in FIG. 3C, a set of image frames 301 for an image (e.g. identified by a particular image identifier) is input to an image ID computing block 330. The set of image frames 301 is broken into respective image frames 302a, 302b, ... 302n, and each image frame is input to a respective frame computing block 320a, 320b, ... , 320n, the operation of which has been described in FIG. 3B. The frame output vectors from the respective frame computing blocks 320a, 320b, ..., 320n are combined into an overall output vector 332 for the image, and the list of probabilities (i.e. the overall output vector) for the image frame is output at 334. In some aspects, generating the overall output vector 332 for the image may comprise selecting a highest probability of respective anomalies from the frame output vectors for each of the plurality of image frames. That is, if an anomaly has a 90% probability of being present in SAR frame 302a, and a 0% probability of being present in SAR frame 302n, the overall output vector 332 for the image would indicate a 90% probability that the anomaly is present in the image set 301. From the overall output vector, the image may be flagged for review if a probability of an anomaly being present exceeds a threshold, and may be classified as anomalous or nominal.

The anomaly detection method was evaluated by manually tagging the images with True Positive (TP), False Positive (FP), False Negative (FN), True Negative (TN). Due to the large number of image acquisitions going through the machine learning inference, only acquisitions that have one of the anomalies detected with over 90% confidence were validated. Based on the 1000 acquisitions that were flagged with 90%+ confidence as being anomalous, it was concluded that: (1) 82% of reportedly anomalous images have one or multiple detected anomalies, they are TP for some anomalies but can be FP or FN for others simultaneously detected anomalies; (2) 57% of reportedly anomalous images are "clean" TP, meaning that the detected anomalies are indeed present in images, and no other major anomalies have been missed or misidentified (or they were not tagged). Once again, this is only based on a sample of images that are detected as anomalous with one or several anomaly types with over 90% confidence. Note that, while some TP results can be simultaneously FN or FP for other anomaly types, these results are currently sufficient as the alerts are triggered and the data is then processed (e.g., correctly detected anomalies join the statistics and are used in system issue investigative efforts). The results were used for retraining of the neural network model, and incorrectly classified images added to the training dataset along with newly discovered anomalous images.

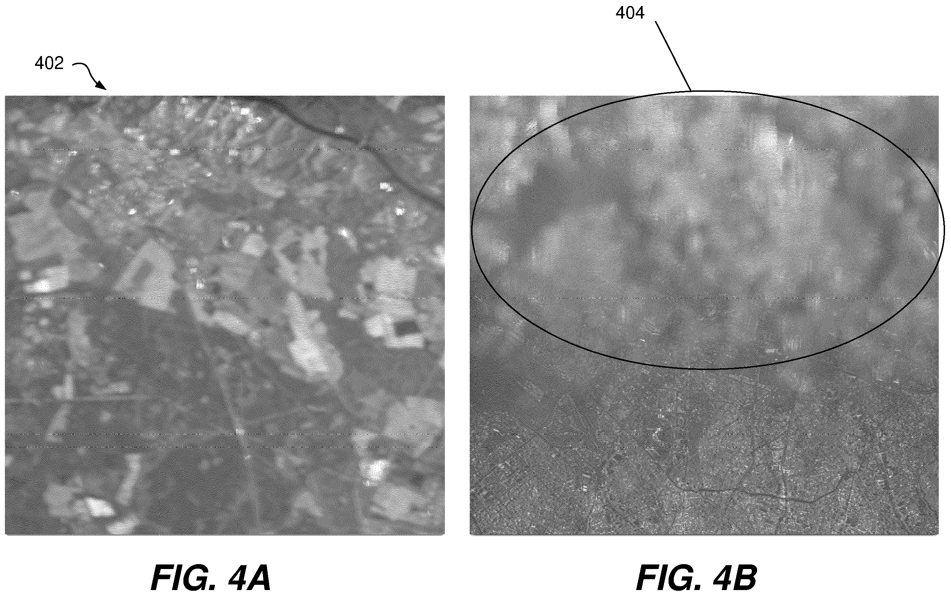

FIGs. 4A to 4T depict examples of synthetic aperture radar (SAR) images with anomalies used as training images. During training, a training SAR image, which has a known anomaly, is input to the plurality of neural networks being trained to identify anomalies. The neural networks may then be trained to classify the anomaly in a test SAR image (i.e., a SAR image for which the anomaly is classified at inference) using the training SAR image.

As used herein, a "test" image refers to an image input to a neural network on which classification is performed, while a "training" image refers to an image input to a neural network to train the network in order to perform that classification. A generic reference to an "image" may refer to a test and/or a training image, depending on the context.

The SAR images shown in FIGs. 4A to 4T show examples of anomalies that the neural networks are trained to detect. The SAR images are in a raster image format such as .png, .jpeg format, etc. As shown in FIGs. 4A to 4T, the plurality of anomalies in SAR images comprises two or more of: blurry, partially blurry, unfocused or smeared, range and nadir return ambiguities, azimuth ambiguities, radio frequency interference, missing data, thunderclouds, amplitude gradient, beam tiling issues, and low contrast/high noise.

FIG. 4A depicts an unfocussed SAR image 402.

FIG. 4B depicts a SAR image with a blurred region 404..

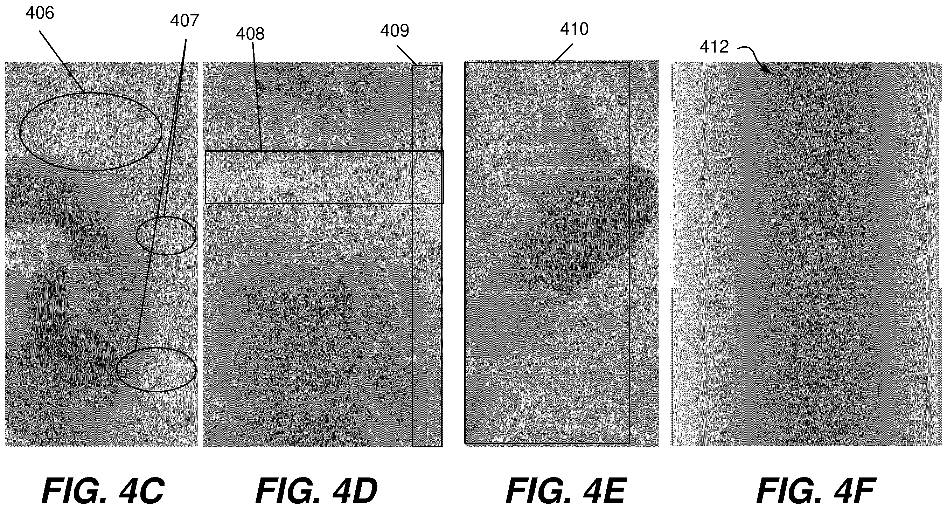

FIG. 4C depicts a SAR image with ambiguities, such as ambiguity 406, and bright line ambiguities showing up in the image, examples of which can be seen at 407. An ambiguity is an artifact seen in the image which does not actually exist.

FIG. 4D depicts a SAR image with amplitude deviation 408 and a nadir return ambiguity 409, which is a special type of range ambiguity that shows up as a bright line through the image.

FIG. 4E depicts a SAR image that comprises range ambiguities 410.

FIG. 4F depicts a SAR image 412 that is corrupted due to an unknown contingency on the satellite.

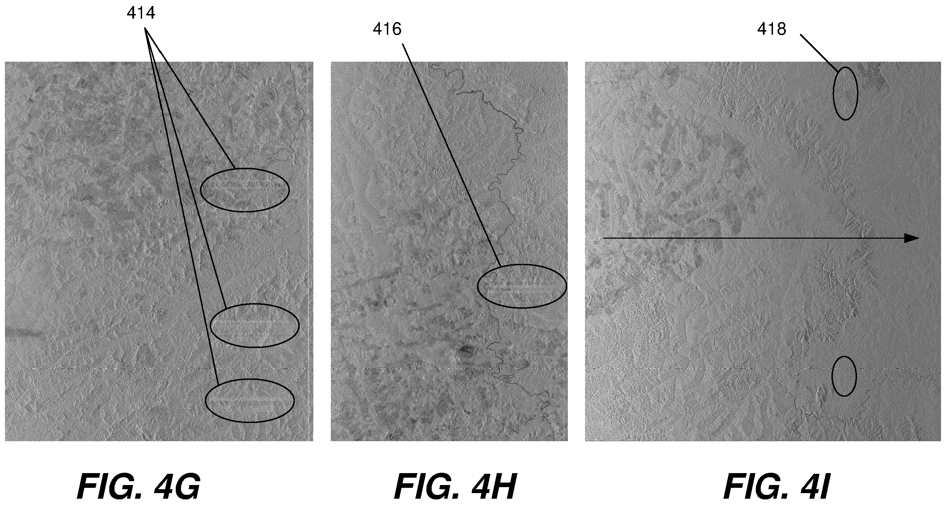

FIGs. 4G, 4H, and 4I depict SAR images showing deforestation and having ambiguities 414, 416, 418. Additionally, the SAR image in FIG. 4I has an amplitude gradient shown by the arrow, where the left side of the image is lighter/brighter than the right side of the image.

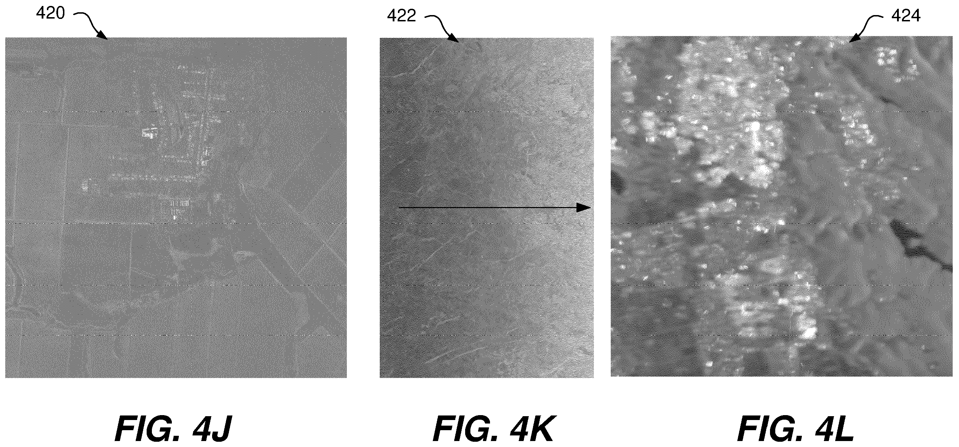

FIG. 4J depicts a SAR image 420 with low contrast and high noise.

FIG. 4K depicts a SAR image 422 with an amplitude gradient as shown by the arrow.

FIG. 4L depicts a SAR image 424 that is unfocused.

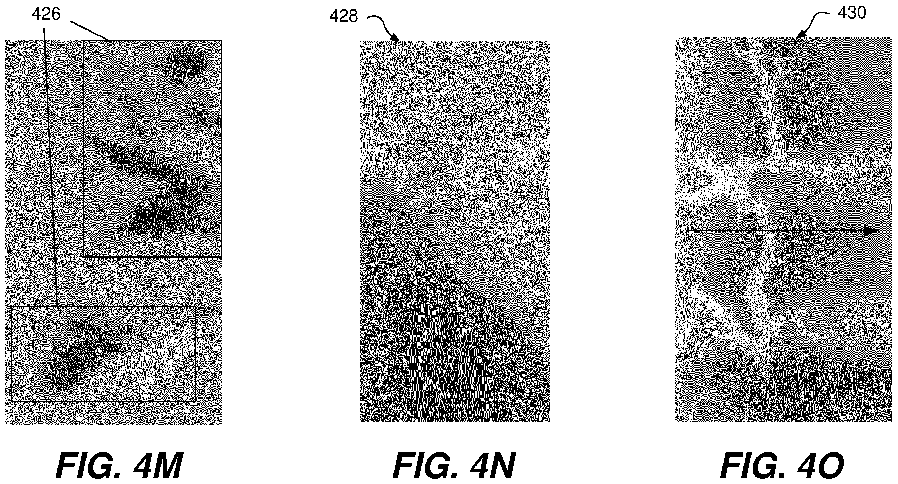

FIG. 4M depicts a SAR image with thunderclouds 426.

FIG. 4N depicts a SAR image 428 with low contrast and high noise.

FIG. 4O depicts a SAR image 430 with an amplitude gradient both in azimuth and range, and is a low contrast and high noise image.

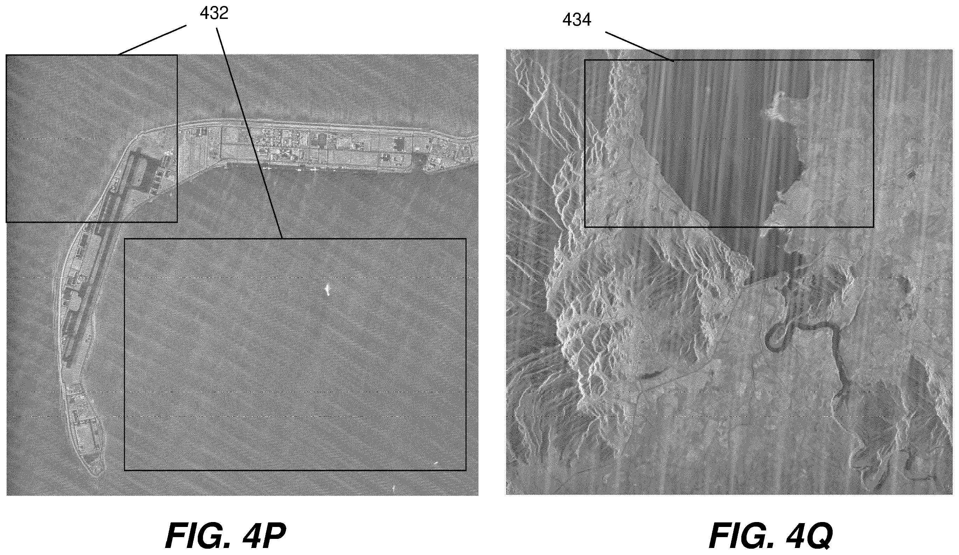

FIG. 4P depicts a SAR image with a repeating radio frequency interference (RFI) pattern occurring over the whole image, as for example highlighted by boxes 432.

FIG. 4Q depicts a SAR image with a repeating radio frequency interference (RFI) pattern occurring over the whole image, as for example highlighted by box 434.

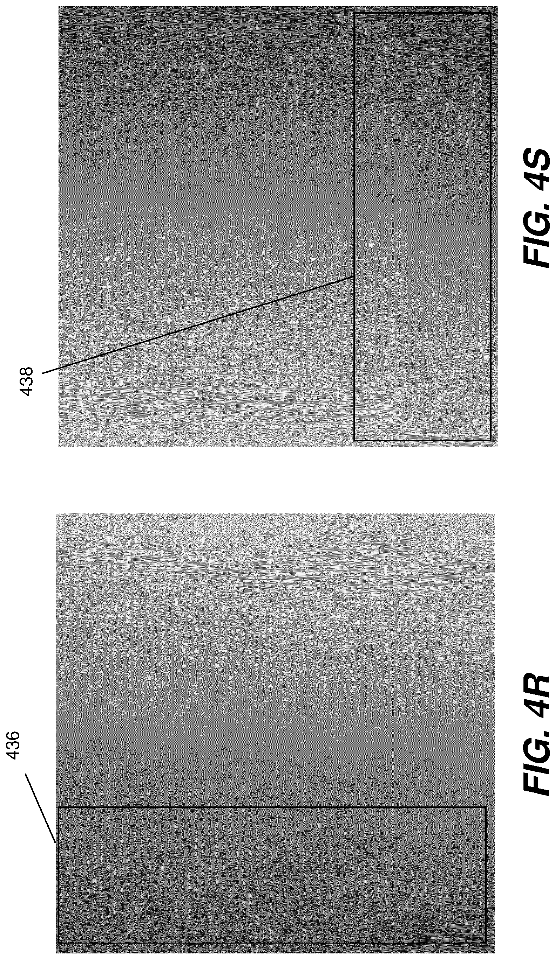

FIG. 4R depicts a SAR image with a beam tiling effect, which is especially pronounced over dark areas as highlighted by box 436.

FIG. 4S depicts a SAR image with a beam tiling effect, which is especially pronounced over dark areas as highlighted by box 438 (some tiles may be darker than others).

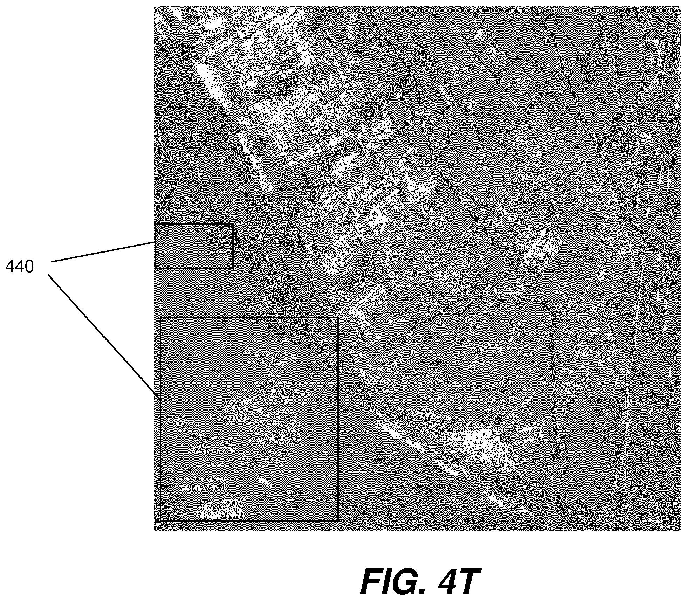

FIG. 4T depicts a SAR image with azimuth ambiguities, as highlighted by boxes 440.

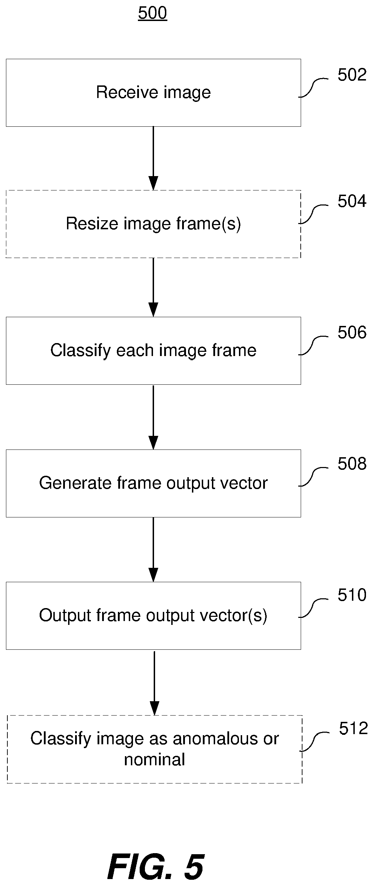

FIG. 5 depicts an anomaly detection method 500 for detecting anomalies in images.

An image is received (502), the image comprising at least one image frame. The image is a synthetic aperture radar (SAR) image. For SAR image frames, which typically have several Mega pixels at full resolution, the image may already be received as a reduced resolution image frame. Alternatively the method may comprise compressing the image frame.

The method may comprise resizing the image frames (504) of the image to standard dimensions for input to the neural networks (e.g., as described at block 306 of FIG. 3A).

Each image frame in the image is classified (506). Using a plurality of neural networks, probabilities of each of a plurality of anomalies being present in the respective image frame are classified. As described above, the plurality of neural networks are each trained to identify in the respective image frame a presence of at least one anomaly of the plurality of anomalies, and to generate an output vector indicative of probabilities of the at least one anomaly being present in the respective image frame. The plurality of anomalies comprises two or more of: blurry, partially blurry, unfocused or smeared, range and nadir return ambiguities, azimuth ambiguities, radio frequency interference, missing data, thunderclouds, amplitude gradients, beam tiling issues, and low contrast/high noise. Further, a neural network may also be trained and used to classify a probability of the respective image frame being nominal, the neural network being trained to identify the respective image as being nominal, and to generate an output vector indicative of a probability of the respective image frame being nominal. As also described above, layers of the neural networks may have input image requirements that are still smaller than a compressed or reduced-resolution image frame. Accordingly, the neural networks may also comprise one or more layers for performing downsampling (e.g. as described with respect to downsampling block 310 in FIG. 3A and 3D), which downsample the image frame while preserving image features in the image frame used for identifying anomalies.

A frame output vector is generated for each respective image frame (508). The frame output vector is generated by combining the output vector generated from each of the plurality of neural networks for the respective image frame. In some embodiments, at least two of the plurality of neural networks are trained to identify in the respective image frame the presence of a same anomaly of the plurality of anomalies. In this case, generating the frame output vector may comprise averaging the probability of the same anomaly determined by the at least two of the plurality of neural networks, or performing some other statistical analysis of the computed probabilities.

The frame output vector for each of the at least one image frame is output (510). Where the image comprises a plurality of image frames, the frame output vector for each of the at least one image frame may be combined to generate an overall output vector for the image, and the overall output vector for the image may be output. Combining the frame output vectors to generate the overall output vector may comprise selecting a highest probability of respective anomalies from the frame output vectors for each of the plurality of image frames. The probabilities in the output vector(s) (e.g. the respective frame output vectors or the overall output vector) can be used to flag images requiring review. For example, if a frame output vector for an image frame indicates that a probability of an anomaly being present in the image frame of the image exceeds a predetermined threshold, the image can be flagged for review.

The image may be classified as anomalous or nominal (512). The classification may be performed based on the frame output vector for each of the at least one image frame. For example, if a frame output vector for an image frame indicates that a probability of an anomaly being present in the image frame of the image exceeds a predetermined threshold (e.g. 75%, 80%, 90%, etc.), the image may be classified as anomalous. If none of the probabilities of each of the plurality of anomalies in the frame output vector for each of the at least one image frame exceeds a predetermined threshold, the image is classified as nominal. When the image comprises a plurality of image frames, the method may comprise combining the frame output vectors for each of the plurality of image frames to generate an overall output vector for the image, and the overall output vector may be used to classify the image as anomalous or nominal. It would be appreciated that a decision of whether an image is deemed anomalous or nominal for sending to a client may be client-specific. For example, some customers wouldn't mind certain ambiguities being present, but the majority of customers would mind images being blurry; or most of the customers may not care about thunderclouds, but some of them might be specifically interested in them (they indicate big storms). Accordingly, using the output of probabilities from the frame output vector, different rules can be applied to classify the image as anomalous or nominal and determine whether it should be made available to a customer.

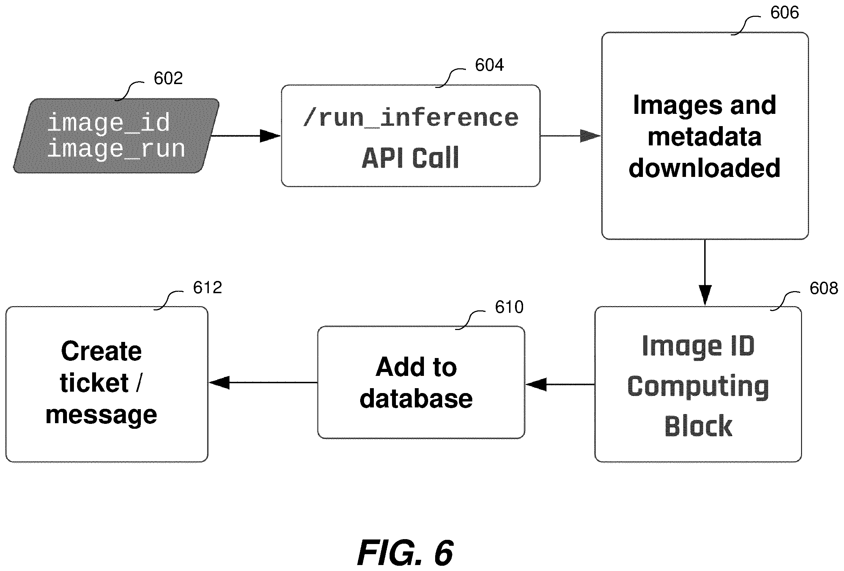

FIG. 6 depicts an example flow diagram of a deployment scheme of the anomaly detection method for quality control. In accordance with the foregoing, the systems and methods disclosed herein provide for automated quality control by identifying anomalies in images.

For a given image identifier (image_id) and image processing run (image_run) (block 602), an API call 604 is made to retrieve images stored in association with the image identifier and image processing run that were captured within a given time window. For example, an API call of run_inference_from_the_past_x_hours_with_offset call retrieves all images acquired during the last hours_since hours, with an offset of hours_offset. The images and associated metadata (e.g. metadata relating to the acquisition of the image, such as time, location, satellite, sensor mode, look angle, orbit direction, etc.) are downloaded (606), and the images are processed (608), for example in accordance with the flow charts depicted in FIGs. 3A to 3D and the method of FIG. 5. Results of the image processing are stored in a database (610). The database may be a relational database that can be used for analyzing anomaly trends from the identified anomalies and metadata. As an example, it may be detected that images are being classified as anomalous that were captured by the same satellite (e.g. as indicated by a satellite_id stored as metadata), and therefore an inference can be made that there is a problem with that satellite. Results may be published in an issue tracking software such as Jira^{™}. A user interface may display the results in a variety of ways, and may for example provide a dashboard for users to view the results including types of anomalies, various graphs, etc. A ticket/message may be created when there is a high probability of an anomaly being present in an image (612). For example, the image may be flagged for review by sending an e-mail or a Slack^{™} message to a user to review the image, and the message may provide a link to the image and the type of anomaly detected.

Accordingly, the anomaly detection method can be implemented as part of a quality control system and provide outputs and alerts to allow for early and more accurate automatic detection of anomalies, quality statistics for anomaly investigation and mitigation purposes, etc. It will be appreciated that the anomaly detection method can be integrated with other tools to make up an overall automatic QA system.

The current disclosure is described with relation to detecting anomalies in SAR imagery. It will be apparent to one skilled in the art that the current disclosure is limited to SAR imagery. In embodiments not covered by the claimed invention, the systems and methods could be equally applied to detecting anomalies and artifacts in high-resolution optical imagery obtained from satellites or aircraft that reduce the quality or accuracy of those images. In an example of detecting anomalies in optical imagery, the DAQC-NN could be trained to quickly and efficiently detect anomalies common to both SAR imagery and optical imagery, such as blurry, partially blurry, unfocused or smeared, missing data, amplitude gradients, low contrast, etc. Other issues that can occur in optical images include, for example, images that are obscured by rain or other types of weather, and images that are too dark due to lack of light, both issues that do not affect SAR images. Anomalies such as azimuth and range ambiguities are particular to SAR images and would not be included in the training of a system designed for optical images. A system according to the current disclosure could also be used for quality assurance in order to identify anomalies in optical images prior to sending them to a customer, for example. Other examples according to the current disclosure include checking images from x-rays and ultrasounds for anomalies and artifacts before relying on them for the purposes of medical diagnoses or dentistry.

The embodiments have been described above with reference to flow, sequence, and block diagrams of methods, apparatuses, systems, and computer program products. In this regard, the depicted flow, sequence, and block diagrams illustrate the architecture, functionality, and operation of implementations of various embodiments. For instance, each block of the flow and block diagrams and operation in the sequence diagrams may represent a module, segment, or portion of code, which comprises one or more executable instructions for implementing the specified action(s). In some alternative embodiments, the action(s) noted in that block or operation may occur out of the order noted in those figures. For example, two blocks or operations shown in succession may, in some embodiments, be executed substantially concurrently, or the blocks or operations may sometimes be executed in the reverse order, depending upon the functionality involved. Some specific examples of the foregoing have been noted above but those noted examples are not necessarily the only examples. Each block of the flow and block diagrams and operation of the sequence diagrams, and combinations of those blocks and operations, may be implemented by special purpose hardware-based systems that perform the specified functions or acts, or combinations of special purpose hardware and computer instructions.

The terminology used herein is for the purpose of describing particular embodiments only and is not intended to be limiting. Accordingly, as used herein, the singular forms "a", "an", and "the" are intended to include the plural forms as well, unless the context clearly indicates otherwise (e.g., a reference in the claims to "a challenge" or "the challenge" does not exclude embodiments in which multiple challenges are used). It will be further understood that the terms "comprises" and "comprising", when used in this specification, specify the presence of one or more stated features, integers, steps, operations, elements, and components, but do not preclude the presence or addition of one or more other features, integers, steps, operations, elements, components, and groups. Directional terms such as "top", "bottom", "upwards", "downwards", "vertically", and "laterally" are used in the following description for the purpose of providing relative reference only, and are not intended to suggest any limitations on how any article is to be positioned during use, or to be mounted in an assembly or relative to an environment. Additionally, the term "connect" and variants of it such as "connected", "connects", and "connecting" as used in this description are intended to include indirect and direct connections unless otherwise indicated. For example, if a first device is connected to a second device, that coupling may be through a direct connection or through an indirect connection via other devices and connections. Similarly, if the first device is communicatively connected to the second device, communication may be through a direct connection or through an indirect connection via other devices and connections. The term "and/or" as used herein in conjunction with a list means any one or more items from that list. For example, "A, B, and/or C" means "any one or more of A, B, and C".

It is contemplated that any part of any aspect or embodiment discussed in this specification can be implemented or combined with any part of any other aspect or embodiment discussed in this specification.

The scope of the claims should not be limited by the embodiments set forth in the above examples, but should be given the broadest interpretation consistent with the description as a whole.

It should be recognized that features and aspects of the various examples provided above can be combined into further examples that also fall within the scope of the present disclosure. In addition, the figures are not to scale and may have size and shape exaggerated for illustrative purposes.

## Claims

1. A computer-implemented anomaly detection method for detecting anomalies in images, comprising:
receiving a synthetic aperture radar (SAR) image comprising at least one image frame (302);
for each respective image frame (302) of the at least one image frame (302):
determining, using a plurality of neural networks, probabilities that each of a plurality of anomalies is present in the respective image frame (302), wherein the plurality of anomalies comprise two or more of: blurry, partially blurry, unfocused or smeared image frame, range or nadir return ambiguities, azimuth ambiguities, radio frequency interference, missing data, thunderclouds, amplitude gradients, beam tiling issues, and low contrast/high noise, and each of the plurality of neural networks being trained to identify in the respective image frame (302) a presence of at least one anomaly of the plurality of anomalies, and to generate an output vector (322) indicative of probabilities that the at least one anomaly is present in the respective image frame (302);
generating a frame output vector (332) by combining the output vectors (322) generated by the plurality of neural networks; and
outputting the frame output vector (332).

2. The computer-implemented method of claim 1, wherein the image comprises a plurality of image frames (301), and wherein the method further comprises: (i) generating an overall output vector (332) by combining the frame output vectors (322), and (ii) outputting the overall output vector (332).

3. The computer-implemented method of claim 2, wherein generating the overall output vector (332) comprises selecting a highest probability of corresponding anomalies from the frame output vectors (322).

4. The computer-implemented method of any one of claims 1 to 3, wherein at least two of the plurality of neural networks are trained to identify in the respective image frame (302) the presence of a same anomaly of the plurality of anomalies, and wherein generating the frame output vector (322) comprises statistically aggregating the probability of the same anomaly.

5. The computer-implemented method of any one of claims 1 to 4, the method further comprising, for each respective image frame (302) of the at least one image frame (302):
determining, using one or more of the plurality of neural networks, a probability of the respective image frame (302) being nominal, wherein the output vector is further indicative of a probability of the respective image frame (302) being nominal.

6. The computer-implemented method of any one of claims 1 to 5, wherein the at least one image frame (302) is an image frame (302) that has been previously reduced in resolution.

7. The computer-implemented method of any one of claims 1 to 6, wherein the plurality of neural networks are convolutional neural networks (312).

8. The computer-implemented method of claim 7, wherein:
each of the plurality of neural networks is further trained to downsample the respective image frame (302) by using a Conv2D layer; and
the method further comprises, for each respective image frame (302) of the at least one image frame (302):
downsampling the respective image frame (302) using each of the plurality of neural networks.

9. The computer-implemented method of any one of claims 1 to 8, wherein if, for an image frame, the corresponding frame output vector indicates that a probability that an anomaly is present in the image frame (302) exceeds a predetermined threshold, the method further comprises flagging the image for review.

10. The computer-implemented method of any one of claims 1 to 8, wherein if, for no image frame (302) , the corresponding frame output vector indicates that a probability that an anomaly is present in the image frame (302) exceeds a predetermined threshold, the method further comprises identifying the image as nominal.

11. An anomaly detection system, comprising:
an image database (610) storing a plurality of image frames (301);
a processor; and
a non-transitory computer readable medium having stored thereon computer program code that is executable by the processor and that, when executed by the processor, configures the system to retrieve image frames (301) from the image database and perform the computer-implemented anomaly detection method of any one of claims 1 to 10.

12. A non-transitory computer readable medium having stored thereon computer program code that is executable by a processor and that, when executed by the processor, causes the processor to perform the computer-implemented anomaly detection method of any one of claims 1 to 10.

## Patentansprüche

1. Computerimplementiertes Verfahren zur Erkennung von Anomalien zum Erkennen von Anomalien in Bildern, umfassend:
Empfangen eines Bildes eines Radars mit synthetischer Apertur (SAR), das mindestens ein Einzelbild (302) umfasst;
für jedes jeweilige Einzelbild (302) des mindestens einen Einzelbilds (302):
Bestimmen unter Verwendung einer Vielzahl von neuronalen Netzwerken von Wahrscheinlichkeiten, dass jede einer Vielzahl von Anomalien im jeweiligen Einzelbild (302) vorhanden ist, wobei die Vielzahl von Anomalien zwei oder mehrere von Folgendem umfasst: verschwommenes, teilweise verschwommenes, unscharfes oder verschmiertes Einzelbild, Bereichs- oder Nadir-Rückkehrmehrdeutigkeiten, Azimutmehrdeutigkeiten, Hochfrequenzstörungen, fehlende Daten, Gewitterwolken, Amplitudengradienten, Strahlkachelungsprobleme und niedriger Kontrast/starkes Rauschen, und wobei jedes der Vielzahl von neuronalen Netzwerken so trainiert ist, dass es im jeweiligen Einzelbild (302) ein Vorhandensein mindestens einer Anomalie der Vielzahl von Anomalien erkennt und einen Ausgabevektor (322) erzeugt, der die Wahrscheinlichkeiten angibt, dass die mindestens eine Anomalie im jeweiligen Einzelbild (302) vorhanden ist;
Erzeugen eines Einzelbild-Ausgabevektors (332) durch Kombinieren der von der Vielzahl neuronaler Netzwerke erzeugten Ausgabevektoren (322); und
Ausgeben des Einzelbild-Ausgabevektors (332).

2. Computerimplementiertes Verfahren nach Anspruch 1, wobei das Bild eine Vielzahl von Einzelbildern (301) umfasst und wobei das Verfahren weiter Folgendes umfasst: (i) Erzeugen eines Gesamtausgabevektors (332) durch Kombinieren der Einzelbild-Ausgabevektoren (322) und (ii) Ausgeben des Gesamtausgabevektors (332).

3. Computerimplementiertes Verfahren nach Anspruch 2, wobei Erzeugen des Gesamtausgabevektors (332) Auswählen einer höchsten Wahrscheinlichkeit entsprechender Anomalien aus den Einzelbild-Ausgabevektoren (322) umfasst.

4. Computerimplementiertes Verfahren nach einem der Ansprüche 1 bis 3, wobei mindestens zwei der Vielzahl von neuronalen Netzwerken so trainiert sind, dass sie im jeweiligen Einzelbild (302) das Vorhandensein derselben Anomalie der Vielzahl von Anomalien erkennen, und wobei Erzeugen des Einzelbild-Ausgabevektors (322) statistisches Aggregieren der Wahrscheinlichkeit derselben Anomalie umfasst.

5. Computerimplementiertes Verfahren nach einem der Ansprüche 1 bis 4, wobei das Verfahren weiter für jedes jeweilige Einzelbild (302) des mindestens einen Einzelbilds (302) Folgendes umfasst:
Bestimmen unter Verwendung eines oder mehrerer der Vielzahl von neuronalen Netzwerken einer Wahrscheinlichkeit, dass das jeweilige Einzelbild (302) nominal ist, wobei der Ausgabevektor weiter eine Wahrscheinlichkeit angibt, dass das jeweilige Einzelbild (302) nominal ist.

6. Computerimplementiertes Verfahren nach einem der Ansprüche 1 bis 5, wobei das mindestens eine Einzelbild (302) ein Einzelbild (302) ist, dessen Auflösung zuvor reduziert wurde.

7. Computerimplementiertes Verfahren nach einem der Ansprüche 1 bis 6, wobei die Vielzahl neuronaler Netzwerke Convolutionale Neurale Netzwerke (312) sind.

8. Computerimplementiertes Verfahren nach Anspruch 7, wobei:
jedes der Vielzahl von neuronalen Netzwerken weiter so trainiert ist, dass es das jeweilige Bild (302) unter Verwendung einer Conv2D-Schicht herunterrechnet; und
das Verfahren weiter für jedes jeweilige Einzelbild (302) des mindestens einen Einzelbilds (302) Folgendes umfasst:
Herunterrechnen des jeweiligen Einzelbilds (302) unter Verwendung jedes der Vielzahl neuronaler Netzwerke.

9. Computerimplementiertes Verfahren nach einem der Ansprüche 1 bis 8, wobei das Verfahren weiter Markieren des Bildes zur Überprüfung umfasst, wenn für ein Einzelbild der entsprechende Einzelbild-Ausgabevektor angibt, dass eine Wahrscheinlichkeit, dass im Einzelbild (302) eine Anomalie vorhanden ist, einen vorgegebenen Schwellenwert überschreitet.

10. Computerimplementiertes Verfahren nach einem der Ansprüche 1 bis 8, wobei das Verfahren weiter Identifizieren des Bildes als nominal umfasst, wenn für kein Einzelbild (302) der entsprechende Einzelbild-Ausgabevektor angibt, dass eine Wahrscheinlichkeit, dass im Einzelbild (302) eine Anomalie vorhanden ist, einen vorbestimmten Schwellenwert überschreitet.

11. System zur Erkennung von Anomalien, wobei das System Folgendes umfasst:
eine Bilddatenbank (610), die eine Vielzahl von Einzelbildern (301) speichert;
einen Prozessor; und
ein nichtflüchtiges, computerlesbares Medium, auf dem Computerprogrammcode gespeichert ist, der vom Prozessor ausführbar ist und der, wenn er vom Prozessor ausgeführt wird, das System so konfiguriert, dass es Einzelbilder (301) aus der Bilddatenbank abruft und das computerimplementierte Verfahren zur Erkennung von Anomalien nach einem der Ansprüche 1 bis 10 durchführt.

12. Nichtflüchtiges, computerlesbares Medium, auf dem Computerprogrammcode gespeichert ist, der vom Prozessor ausführbar ist und der, wenn er vom Prozessor ausgeführt wird, bewirkt, dass der Prozessor das computerimplementierte Verfahren zur Erkennung von Anomalien nach einem der Ansprüche 1 bis 10 durchführt.

## Revendications

1. Procédé de détection d'anomalie mis en œuvre par ordinateur pour détecter des anomalies dans des images, comprenant :
recevoir une image radar à synthèse d'ouverture (SAR) comprenant au moins une trame d'image (302) ;
pour chaque trame d'image respective (302) de la au moins une trame d'image (302) :
déterminer, à l'aide d'une pluralité de réseaux neuronaux, les probabilités que chacune d'une pluralité d'anomalies soit présente dans la trame d'image respective (302), la pluralité d'anomalies comprenant deux ou plusieurs des éléments suivants : trame d'image floue, partiellement floue, non-focalisée ou maculée, ambiguïtés de portée ou de retour nadir, ambiguïtés d'azimut, interférences de radiofréquence, données manquantes, nuages d'orage, gradients d'amplitude, problèmes de pavage de faisceau et faible contraste/bruit élevé, et chacun de la pluralité de réseaux neuronaux étant entraîné pour identifier dans la trame d'image respective (302) une présence d'au moins une anomalie de la pluralité d'anomalies, et pour générer un vecteur de sortie (322) indicatif de probabilités que la au moins une anomalie soit présentes dans la trame d'image respective (302) ;
générer un vecteur de sortie de trame (332) en combinant les vecteurs de sortie (322) générés par la pluralité de réseaux neuronaux ; et
délivrer en sortie le vecteur de sortie de trame (332).

2. Procédé mis en œuvre par ordinateur selon la revendication 1, dans lequel l'image comprend une pluralité de trames d'image (301), et dans lequel le procédé comprend en outre les étapes consistant à : (i) générer un vecteur de sortie global (332) en combinant les vecteurs de sortie de trame (322), et (ii) délivrer en sortie le vecteur de sortie global (332).

3. Procédé mis en œuvre par ordinateur selon la revendication 2, dans lequel la génération du vecteur de sortie global (332) comprend une sélection d'une probabilité la plus élevée d'anomalies correspondantes à partir des vecteurs de sortie de trame (322).

4. Procédé mis en œuvre par ordinateur selon l'une quelconque des revendications 1 à 3, dans lequel au moins deux de la pluralité de réseaux neuronaux sont entraînés pour identifier dans la trame d'image respective (302) la présence d'une même anomalie de la pluralité d'anomalies, et dans lequel la génération du vecteur de sortie de trame (322) comprend une agrégation statistique de la probabilité de la même anomalie.

5. Procédé mis en œuvre par ordinateur selon l'une quelconque des revendications 1 à 4, le procédé comprenant en outre, pour chaque trame d'image respective (302) de la au moins une trame d'image (302) :
déterminer, à l'aide d'un ou plusieurs de la pluralité de réseaux neuronaux, une probabilité que la trame d'image respective (302) soit nominale, dans lequel le vecteur de sortie est en outre indicatif d'une probabilité que la trame d'image respective (302) soit nominale.

6. Procédé mis en œuvre par ordinateur selon l'une quelconque des revendications 1 à 5, dans lequel la au moins une trame d'image (302) est une trame d'image (302) dont la résolution a été précédemment réduite.

7. Procédé mis en œuvre par ordinateur selon l'une quelconque des revendications 1 à 6, dans lequel la pluralité de réseaux neuronaux sont des réseaux neuronaux convolutifs (312).

8. Procédé mis en œuvre par ordinateur selon la revendication 7, dans lequel :
chacun de la pluralité de réseaux neuronaux est en outre entraîné pour sous-échantillonner la trame d'image respective (302) en utilisant une couche Conv2D ; et
le procédé comprend en outre, pour chaque trame d'image respective (302) de la au moins une trame d'image (302), l'étape consistant à :
sous-échantillonner la trame d'image respective (302) en utilisant chacun de la pluralité de réseaux neuronaux.

9. Procédé mis en œuvre par ordinateur selon l'une quelconque des revendications 1 à 8, dans lequel si, pour une trame d'image, le vecteur de sortie de trame correspondant indique qu'une probabilité qu'une anomalie soit présente dans la trame d'image (302) dépasse un seuil prédéterminé, le procédé comprend en outre le marquage de l'image pour examen.

10. Procédé mis en œuvre par ordinateur selon l'une quelconque des revendications 1 à 8, dans lequel si, pour aucune trame d'image (302), le vecteur de sortie de trame correspondant indique qu'une probabilité qu'une anomalie soit présente dans la trame d'image (302) dépasse un seuil prédéterminé, le procédé comprend en outre une identification de l'image comme nominale.

11. Système de détection d'anomalie, comprenant :
une base de données d'images (610) stockant une pluralité de trames d'images (301) ;
un processeur ; et
un support lisible par ordinateur non transitoire sur lequel est stocké un code de programme informatique qui peut être exécuté par le processeur et qui, lorsqu'il est exécuté par le processeur, configure le système pour récupérer des trames d'image (301) à partir de la base de données d'images et exécuter le procédé de détection d'anomalie mis en œuvre par ordinateur selon l'une quelconque des revendications 1 à 10.

12. Support lisible par ordinateur non transitoire sur lequel est stocké un code de programme informatique qui peut être exécuté par un processeur et qui, lorsqu'il est exécuté par le processeur, amène le processeur à exécuter le procédé de détection d'anomalie mis en œuvre par ordinateur selon l'une quelconque des revendications 1 à 10.
